# EUROPÄISCHE PATENTSCHRIFT

(11) **EP 2 399 781 B1**
(45) Veröffentlichungstag und Bekanntmachung des Hinweises auf die Patenterteilung: **02.01.2013**
(21) Anmeldenummer: 10167555.1
(22) Anmeldetag: 28.06.2010
(51) Int. Cl.: B60R 1/07

(54) **Außenrückblickspiegel mit einer elektrischen Verbindung zu einer im Außenrückblickspiegelgehäuse beherbergten elektrischen Komponente**
External rear view mirror with an electrical connection to an electric component housed in the external rear view mirror housing
Rétroviseur extérieur doté d'une liaison électrique vers un composant électrique hébergé dans le boîtier du rétroviseur extérieur

(43) Veröffentlichungstag der Anmeldung: 28.12.2011
(73) Patentinhaber: SMR Patents S.à.r.l., 1653 Luxembourg (LU)
(72) Erfinder: Schmierer, Arne, 73230, Kirchheim (DE); Negel, Raimund, 72669, Unterensingen (DE); Herrmann, Andreas, 71364, Winnenden-Baach (DE); Szmolenszki, Istvan, 71409, Schwaikheim (DE)
(74) Vertreter: Weber-Bruls, Dorothée

(56) Entgegenhaltungen:
- EP-A1- 0 644 084
- EP-A1- 1 717 103
- EP-A2- 1 197 390
- DE-A1- 10 006 397
- DE-A1- 19 601 565
- US-A1- 2002 171 906

## Beschreibung

Die Erfindung betrifft einen Außenrückblickspiegel für ein Kraftfahrzeug mit einem Außenrückblickspiegelgehäuse und einer darin untergebrachten elektrischen Verbindung gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Spiegelfuß kann beispielsweise als Druckgussteil aus einem den auftretenden Kräften und Momenten widerstehenden Werkstoff hergestellt sein. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Dabei können Lagermittel zwischen Spiegelfuß und Grundträger vorgesehen sein, um Verschleiß und auftretende Reibungskräfte während des Verschwenkens möglichst gering zu halten.

Der Grundträger ist vorzugsweise ebenfalls als Druckgussteil aus einem den auftretenden Kräften und Momenten widerstehenden Werkstoff hergestellt, beispielsweise aus dem selben Werkstoff wie der Spiegelfuß. Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Beispielsweise kann das Spiegelglas mittels einer Klebeverbindung auf der Trägerplatte montiert sein. Die Trägerplatte kann an der Verstellanordnung und/oder an der Grundplatte geführt und/oder gelagert sein. Der Begriff Trägerplatte bezeichnet hierbei einen Träger, der zumindest eine eben oder gewölbt ausgeführte, geschlossene oder gitterförmig unterbrochene, z.B. wabenförmige Trägerfläche aufweist, die geeignet ist, um darauf ein Spiegelglas beispielsweise mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann alternativ oder zusätzlich zu einer elektromotorisch betätigbaren Verstellanordnung für das Spiegelglas wenigstens eine weitere elektrische Komponente aufweisen, wie etwa eine Wiederholblinkleuchte, ein beheizbares Spiegelglas, ein elektrochromatisch abblendbares Spiegelglas, ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen, oder eine Kombination hiervon. Alternativ oder zusätzlich kann der Außenrückblickspiegel wenigstens eine als ein Sensor ausgebildete elektrische Komponente aufweisen, wie etwa einen Sensor zur Erfassung von Fahr- und/oder Umgebungszuständen, wie beispielsweise Temperatur, Helligkeit, Verschmutzungsgrad, Beleuchtungssituation, beispielsweise um das Spiegelglas automatisch zu beheizen und/oder z.B. elektrochromatisch abzublenden.

Ein bekanntes Ziel bei der Entwicklung und Herstellung von Kraftfahrzeugteilen, wie etwa einer Außenrückblickspiegelanordnung oder einem Außenrückblickspiegel, ist eine einfache, zeitsparende Montage.

Dieses Ziel wird häufig von im Inneren des Außenrückblickspiegelgehäuses herzustellenden elektrischen Verbindungen zu wenigstens zum Teil in dem Außenrückblickspiegelgehäuse beherbergten elektrischen Komponenten verfehlt, verbunden mit dem Nachteil eines hohen Zeitaufwands bei der Montage sowie dem Austausch beschädigter oder fehlerhafter elektrischer Komponenten des Außenrückblickspiegels beispielsweise bei der Wartung eines Kraftfahrzeugs.

Vor allem tritt dieser Nachteil bei elektrischen Verbindungen auf, die wenigstens ein mit einer Steckverbindung versehenes Verbindungskabel, wie etwa ein durch die Steckverbindung trennbares Verbindungskabel aufweisen. Solche elektrischen Verbindungen werden beispielsweise benötigt, um eine frei bewegliche elektrische Verbindung im Inneren des Außenrückblickspiegelgehäuses herzustellen. Eine solche frei bewegliche elektrische Verbindung kann beispielsweise für gegenüber dem Außenrückblickspiegelgehäuse verstellbare elektrische Komponenten vorgesehen sein, beispielsweise ein beheizbares und/oder elektrochromatisch abblendbares Spiegelglas, unter der Maßgabe, dass der frei bewegliche Teil der elektrischen Verbindung so bemessen ist, dass die Verstellbarkeit der elektrischen Komponente grundsätzlich nicht eingeschränkt ist

Aus der US 2002/0171906 ist eine einen elektrische Verdrahtung in einem Außenspiegel bekannt. Die verschiedenen elektrischen Komponenten werden über Stecker und Zwischenstecker an den Hauptstecker 28, 28B angeschlossen. Die ungefähre Lage der Stecker im Gehäuse wird dabei durch die elektrische Komponente bestimmt, die versorgt werden soll. So ist ein Stecker für die Glasheizung vorgesehen, einer für den Blinker usw. wobei die Stecker nicht befestigt sind.

Eine Aufgabe der Erfindung ist es einen verbesserten Außenrückblickspiegel für ein Kraftfahrzeug zu entwickeln, welcher Außenrückblickspiegel ein Außenrückblickspiegelgehäuse und zumindest eine darin untergebrachte elektrische Verbindung mit wenigstens einem mit einer Steckverbindung versehenen Verbindungskabel zu mindestens einer wenigstens zum Teil in dem Außenrückblickspiegel beherbergten elektrischen Komponente aufweist, welche elektrische Verbindung eine einfache Montage und einen einfachen Austausch wenigstens einer elektrischen Komponente des Außenrückblickspiegels mit geringem Zeitaufwand zulässt.

Die Aufgabe wird gelöst durch die Merkmale des Anspruchs 1.

Demnach ist ein Außenrückblickspiegel für ein Kraftfahrzeug vorgesehen, welcher Außenrückblickspiegel ein Außenrückblickspiegelgehäuse und wenigstens eine zumindest zum Teil im Inneren des Außenrückblickspiegelgehäuses beherbergte elektrische Komponente aufweist, ebenso wie eine in dem Außenrückblickspiegelgehäuse untergebrachte elektrische Verbindung zu der elektrischen Komponente. Die elektrische Verbindung weist wenigstens ein Verbindungskabel und zumindest eine Steckverbindung auf, etwa ein mit einer Steckverbindung versehenes, beispielsweise durch diese trennbares Verbindungskabel. Die Steckverbindung umfasst ein zumindest mittels eines Abschnitts des wenigstens einen Verbindungskabels an die elektrische Komponente angeschlossenes erstes Steckerteil und ein dem ersten Steckerteil zugeordnetes, im Außenrückblickspiegelgehäuse festgelegtes und beispielsweise über den Spiegelfuß und über die gelenkige Verbindung zwischen Grundträger und Spiegelfuß hinweg elektrisch kontaktiertes zweites Steckerteil.

Die Steckverbindung ist durch das am Außenrückblickspiegelgehäuse festgelegte zweite Steckerteil fixiert und befindet sich demnach unbeweglich am Außenrückblickspiegelgehäuse und nicht freibeweglich zwischen zwei Abschnitten des wenigstens einen Verbindungskabels. Ein gegebenenfalls erforderlicher freibeweglicher Teil der elektrischen Verbindung wird ausschließlich durch den zum Anschluss des ersten Steckerteils an die elektrische Komponente vorgesehenen Abschnitt des Verbindungskabels gebildet.

Vorteile der Erfindung gegenüber dem Stand der Technik ergeben sich unter anderem dadurch, dass dadurch die elektrische Verbindung mit nur einer Hand durch Ineinanderstecken von erstem und zweitem Steckerteil hergestellt und ebenso mit nur einer Hand durch Herausziehen des ersten as dem zweiten Steckerteil gelöst werden kann. Die Montage und der Austausch einer elektrischen Komponente, für die eine derartige elektrische Verbindung vorgesehen ist, werden hierdurch stark vereinfacht, da mit einer Hand die elektrische Komponente gehalten, und mit der zweiten Hand die elektrische Verbindung hergestellt oder getrennt werden kann. Die Festlegung des zweiten Steckerteils bildet quasi eine «dritte Hand», welche die Herstellung oder die Lösung der Steckverbindung durch Hineinschieben oder Herausziehen des ersten Steckerteils in das oder aus dem zweiten Steckerteil mit nur einer Hand ermöglicht. Durch den zwischen der Steckverbindung und der elektrischen Komponente verbleibenden Abschnitt des Verbindungskabels bleibt die elektrische Verbindung bei Bedarf frei beweglich, so dass sie auch zur elektrischen Kontaktierung relativ gegenüber dem Außenrückblickspiegelgehäuse verstellbarer elektrischer Komponenten geeignet ist, ohne deren Verstellbarkeit gegenüber dem Außenrückblickspiegelgehäuse grundsätzlich einzuschränken. Der Außenrückblickspiegel lässt außerdem durch den zwischen der Steckverbindung und der elektrischen Komponente verbleibenden Abschnitt des Verbindungskabels bei gleichzeitig am Außenrückblickspiegelgehäuse festgelegtem zweiten Steckerteil der Steckverbindung eine einfache Montage und einen einfachen Austausch wenigstens einer elektrischen Komponente des Außenrückblickspiegels mit geringem Zeitaufwand zu.

Die Festlegung kann durch eine beispielsweise lösbare Klipsverbindung zwischen Außenrückblickspiegelgehäuse und zweitem, gehäuseseitigem Steckerteil hergestellt sein. Grundsätzlich ist auch eine Schraubverbindung zwischen zweitem Steckerteil und Außenrückblickspiegelgehäuse zur Festlegung des zweiten Steckerteils der Steckverbindung am Außenrückblickspiegelgehäuse denkbar. Darüber hinaus kann das zweite Steckerteil in das Außenrückblickspiegelgehäuse beispielsweise durch Spritzgießen integriert sein.

Eine weitere, zweite Steckverbindung kann als Anschluss des mit dem ersten Steckerteil verbundenen Abschnitts des Verbindungskabels an die elektrische Komponente vorgesehen sein. Der Abschnitt des Verbindungskabels kann demnach durch die zweite Steckverbindung mit der elektrischen Komponente verbunden sein. Dabei kann je nach Einbausituation der elektrischen Komponente und je nachdem, ob die erste Steckverbindung zwischen Verbindungskabel und erstem Steckerteil oder die zweite Steckverbindung zwischen Verbindungskabel und elektrischer Komponente unmittelbar vor dem Einbau besser zugänglich ist, zunächst wahlweise die erste oder die zweite Steckverbindung hergestellt werden.

Das Verbindungskabel kann ein- oder mehradrig sein, wobei im Falle eines mehradrigen Verbindungskabels die Steckverbindung bevorzugt Steckerteile aufweist, welche korrespondierende Kontaktmittel für alle Adern des Verbindungskabels umfassen.

Die beispielsweise als Kontaktstifte und -hülsen ausgeführten korrespondierenden Kontaktmittel des ersten und des zweiten Steckerteils können eine Steckrichtung vorgeben, entlang welcher zur Herstellung oder zur Lösung der Steckverbindung eine Relativbewegung zwischen erstem und zweitem Steckerteil erforderlich ist. Die mit der Steckrichtung übereinstimmende Orientierung der Steckverbindung ist vorzugsweise von dem im Außenrückblickspiegelgehäuse festgelegten zweiten Steckerteil aus betrachtet zur elektrischen Komponente hin und besonders bevorzugt zur auf der Rückseite des Außenrückblickspiegelgehäuses vorgesehenen Öffnung für das Spiegelglas hin.

Die Lage des zweiten Steckerteils im Außenrückblickspiegelgehäuse beispielsweise in der oben beschriebenen Orientierung der Steckrichtung der Steckverbindung ist vorzugsweise so gewählt, dass es von der Öffnung her gesehen bei abgenommenem Spiegelglas bzw. bei abgenommener, das Spiegelglas tragenden Trägerplatte zu keinerlei Überdeckung der Steckverbindung mit dem Grundträger oder einem anderen im Außenrückblickspiegelgehäuse untergebrachten Bauteil, wie etwa einer elektrischen Komponente kommt. Demnach ist vorgesehen, dass das zweite Steckerteil von der Öffnung her gesehen bei abgenommener, das Spiegelglas tragenden Trägerplatte frei von einer Überdeckung durch andere, im Außenrückblickspiegelgehäuse beherbergter Bauteile zugänglich ist.

Handelt es sich beispielsweise bei der elektrischen Komponente um ein auf der Trägerplatte angeordnetes beheizbares und/oder elektrochromatisch abblendbares Spiegelglas und dient die elektrische Verbindung der Beheizung und/oder Steuerung der elektrochromatischen Abblendung des Spiegelglases, so ist das erste, komponentenseitige Steckerteil vorzugsweise mit seiner das zweite, gehäuseseitige Steckerteil aufnehmenden oder empfangenden Seite zur Öffnung an der Rückseite des Außenspiegelgehäuses hin orientiert. In der beschriebenen Lage und Orientierung kann so bei abgenommenem Spiegelglas die Steckverbindung der elektrischen Verbindung leicht erreicht und hergestellt oder bei Bedarf gelöst werden. Durch die Festlegung des ersten Steckerteils im Außenrückblickspiegelgehäuse ist darüber hinaus eine einhändige und damit einfache Montage möglich, da das zweite Steckerteil einfach in das erste Steckerteil hineingesteckt bzw. aus diesem herausgezogen werden kann.

Das erste und/oder das zweite Steckerteil können mit einer Dichtung gegen das Eindringen von beispielsweise Feuchtigkeit und/oder Schmutz in die Steckverbindung versehen sein.

Beispielsweise um eine Montage der verschiedenen, zumindest zum Teil im Inneren des Außenrückblickspiegelgehäuses beherbergten Komponenten sowie gegebenenfalls deren elektrische Verbindungen untereinander und/oder mit einem kraftfahrzeugseitig untergebrachten Steuergerät bei einem derartigen Außenrückblickspiegel zu ermöglichen, kann das Außenrückblickspiegelgehäuse zumindest zweiteilig ausgeführt sein. Ein erstes Gehäuseteil bildet beispielsweise den Gehäuseboden, ein zweites Gehäuseteil beispielsweise den Gehäusedeckel. Eines der beiden Gehäuseteile kann dabei die um die Öffnung für das Spiegelglas herumliegende Gehäusepartie mit den die Öffnung umgebenden Wandungen umfassen.

Das Außenrückspiegelgehäuse kann als zusätzliche oder alternative elektrische Komponente eine Wiederholblinkleuchte beherbergen und/oder ein Modul und/oder einen Sensor einer Fahrassistenzvorrichtung und/oder ein Modul und/oder einen Sensor zur Steuerung einer Fahrzeugfunktion, wie beispielsweise zur Steuerung einer Beheizung und/oder automatischen Abblendung des Spiegelglases. Bei dem Modul und/oder Sensor für eine Fahrassistenzvorrichtung kann es sich beispielsweise um ein Anzeigemodul einer Totwinkelüberwachung, eine Spurverlasswarnung oder einer Annäherungsüberwachung, einen Empfänger zur satellitengestützten Positionsbestimmung oder dergleichen, oder eine Kombination hiervon handeln. Bei dem Modul und/oder dem Sensor zur Steuerung einer Fahrzeugfunktion kann es sich beispielsweise um einen Temperatursensor und/oder einen Helligkeitssensor handeln.

Die elektrische Verbindung mit einer Steckverbindung und einem Verbindungskabel kann auch für elektrische Komponenten vorgesehen sein, die beispielsweise durch Einschieben in das Außenrückblickspiegelgehäuse montiert werden, wobei die elektrische Verbindung vor dem Einschieben hergestellt wird, indem das erste Steckerteil mit dem zweiten Steckerteil verbunden wird.

Wichtig ist hervorzuheben, dass die Ausdrücke erstes und zweites Steckerteil, erstes und zweites Gehäuseteil, sowie allgemein die Begriffe erste, zweite keine Reihenfolge oder konkrete Anleitung zur Anordnung bezeichnen, sondern lediglich einer Unterscheidung dienen und beliebig austauschbar sind.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Fig. 1: eine Detailansicht eines in einem Außenrückblickspiegelgehäuse festgelegten zweiten Steckerteils einer Steckverbindung einer elektrischen Verbindung zu einem in dem Außenrückblickspiegelgehäuse beherbergten elektrochromatisch abblendbaren Spiegelglas in perspektivischer Ansicht.
- Fig. 2: eine Detailansicht eines in einem Außenrückblickspiegelgehäuse festgelegten zweiten Steckerteils einer Steckverbindung einer elektrischen Verbindung zu einer in dem Außenrückblickspiegelgehäuse untergebrachten elektromotorischen Verstellanordnung für ein Spiegelglas in perspektivischer Ansicht.
- Fig. 3: eine Detailansicht eines in einem Außenrückblickspiegelgehäuse festgelegten zweiten Steckerteils einer Steckverbindung einer elektrischen Verbindung zu einer wenigstens zum Teil in dem Außenrückblickspiegelgehäuse untergebrachten Wiederholblinkleuchte in perspektivischer Ansicht.

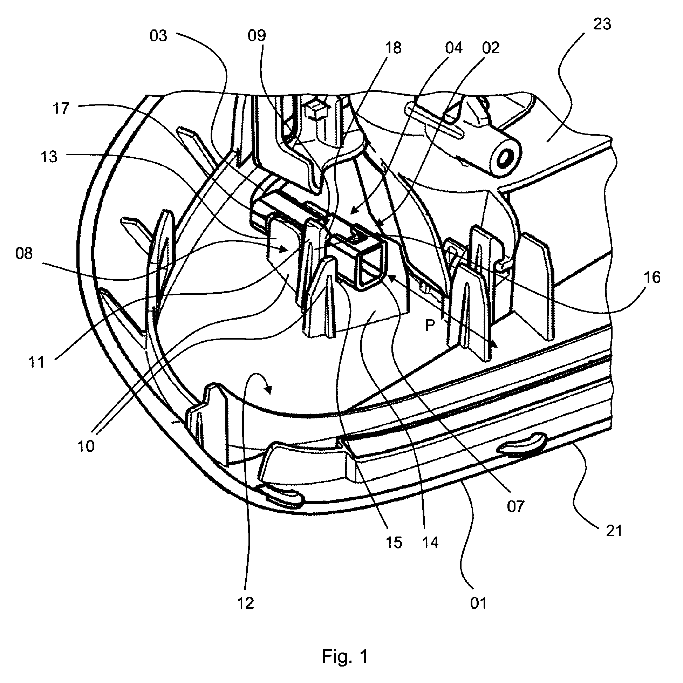

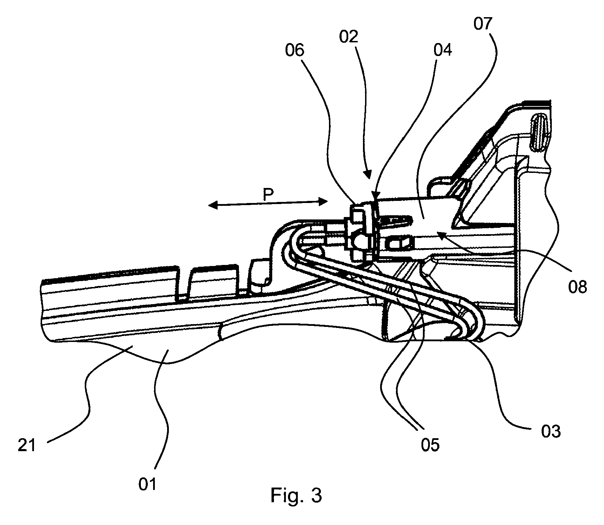

Ein in den Fig. 1 bis 3 zum Teil dargestellter Außenrückblickspiegel für ein Kraftfahrzeug weist ein Außenrückblickspiegelgehäuse 01 und mindestens eine elektrische Verbindung 02 zu wenigstens einer zumindest zum Teil im Inneren des Außenrückblickspiegelgehäuses 01 untergebrachten elektrischen Komponente auf. Die elektrische Verbindung weist wenigstens ein Verbindungskabel 03 und zumindest eine Steckverbindung 04 auf. Die Steckverbindung 04 umfasst ein zumindest mittels eines in Fig. 3 dargestellten Abschnitts 05 des wenigstens einen Verbindungskabels 04 an die nicht dargestellte elektrische Komponente angeschlossenes erstes Steckerteil 06 und ein dem ersten Steckerteil 06 zugeordnetes, im Außenrückblickspiegelgehäuse 01 festgelegtes zweites Steckerteil 07.

Die Festlegung 08 des zweiten Steckerteils 07 in dem Außenrückblickspiegelgehäuse 01 kann wie in den Fig. 1 bis 3 ersichtlich auf verschiedene Art und Weise hergestellt sein.

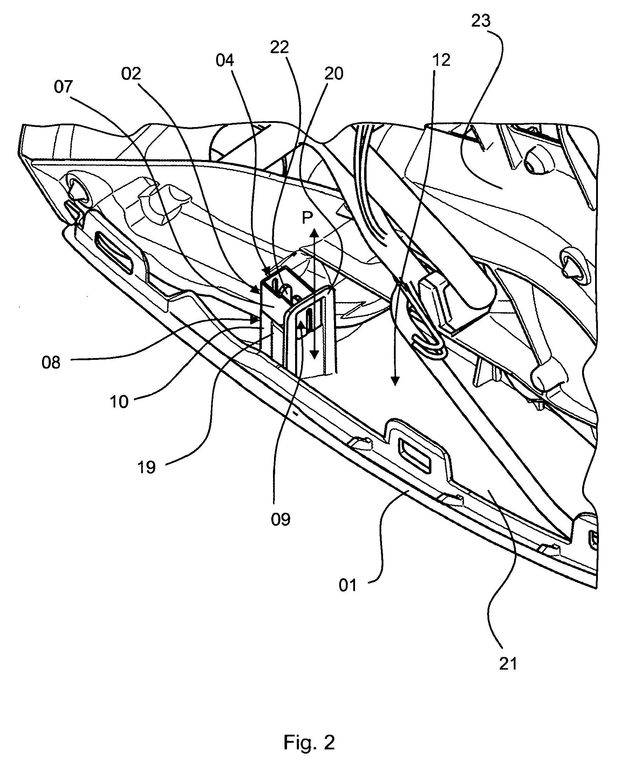

Eine erste Möglichkeit ist eine in den Fig. 1 und 2 dargestellte, lösbare Klipsverbindung 09 als Festlegung 08 zwischen Außenrückblickspiegelgehäuse 01 und zweitem Steckerteil 07.

Die Klipsverbindung 09 in Fig. 1 umfasst eine Aufnahme 10 für das zweite Steckerteil 07 und mindestens eine das zweite Steckerteil 07 hintergreifende Rastnase 11. Die Aufnahme 10 kann durch zwei oder mehrere an einer Innenwand 12 des Außenrückblickspiegelgehäuses 01 angeordnete, beispielsweise längs und quer zum zweiten Steckerteil 07 verlaufende Stege 13, 14 gebildet sein. Wenigstens einer der Stege 14 kann einen Ausschnitt 15 aufweisen, welcher mit einer Kontur des zweiten Steckerteils 07 in einem Querschnitt korrespondiert. Der Querschnitt liegt dabei in einer durch den entsprechenden Steg 14 gebildeten Ebene. Zwischen oder neben den Stegen 13, 14 kann die mindestens eine Rastnase 11 an der Innenwand 12 des Außenrückblickspiegelgehäuses 01 angeordnet sein. Die Rastnase 11 besteht aus einer biegesteifen Schwinge oder Rastfeder 16, welche mit einem ersten Ende an der Innenwand 12 des Außenrückblickspiegelgehäuses 01 befestigt ist. Das zweite, freie Ende 17 der Rastfeder 16 ragt frei von der Innenwand weg in den vom Außenrückblickspiegelgehäuse 01 umschlossenen Innenraum. Das freie Ende 17 ist quer zum zweiten Steckerteil 07 federelastisch beweglich. An dem freien Ende 17 ist ein zum zweiten Steckerteil 07 hin auskragender Rastvorsprung 18 angeordnet. Die Länge der Rastfeder 16 ist dabei so bemessen, dass der Rastvorsprung 18 vom ersten, an der Innenwand 12 des Außenrückblickspiegelgehäuses 01 befestigten Ende der Rastfeder 16 aus gesehen das in der Aufnahme 10 aufgenommene zweite Steckerteil 07 hintergreift. Die Stege 13, 14 ebenso wie die Rastnase 11 können als integrale Bestandteile des Außenrückblickspiegelgehäuses 01 beispielsweise im Spritzgussverfahren hergestellt sein.

Die Klipsverbindung 09 in Fig. 2 umfasst ebenfalls eine Aufnahme 10, die jedoch als ein Aufnahmeschacht 19 ausgeführt ist, der das zweite Steckerteil 07 rückwärtig umschließt. Der Aufnahmeschacht 19 ist ebenfalls an der Innenwand 12 des Außenrückblickspiegelgehäuses 01 angeordnet. Der Aufnahmeschacht 19 kann ebenso als integraler Bestandteil des Außenrückblickspiegelgehäuses 01 an eine Innenwand 12 angespritzt sein. Bei der Klipsverbindung 09 in Fig. 2 ist ein Rastfenster 20 vorgesehen, welches nach dem Einführen des rückwärtigen Teils des zweiten Steckerteils 07 in den Aufnahmeschacht 19 den vorderen Teil des zweiten Steckerteils 07 übergreift.

In Fig. 3 ist die Festlegung 08 hergestellt, indem das zweite Steckerteil 07 als integraler Bestandteil an die Innenwand 12 des Außenrückblickspiegelgehäuses 01 angespritzt ist.

Das Außenrückblickspiegelgehäuse 01 kann zumindest zweiteilig ausgeführt sein. Das Außenrückblickspiegelgehäuse 01 besteht in diesem Fall zumindest aus einem ersten Gehäuseteil 21 und einem in den Fig. 1 bis 3 nicht dargestellten zweiten Gehäuseteil Das Außenrückblickspiegelgehäuse 01 weist auf seiner der Fahrtrichtung des Kraftfahrzeugs abgewandten Rückseite eine Öffnung für ein Spiegelglas auf. Eines der beiden Gehäuseteile umfasst eine um die Öffnung für das Spiegelglas herumliegende Gehäusepartie mit die Öffnung umgebenden Wandungen. Beispielsweise umfasst das zweite Gehäuseteil die um die Öffnung für das Spiegelglas herumliegende Gehäusepartie. Das erste Gehäuseteil 21 kann einen Gehäuseboden bilden oder umfassen, wohingegen das zweite Gehäuseteil einen Gehäusedeckel bilden oder umfassen kann. Durch die zweiteilige Ausführung des Außenrückblickspiegelgehäuses 01 wird die Montage des Außenrückblickspiegels durch eine verbesserte Zugänglichkeit der einzelnen Bauteile, elektrischen Komponenten und elektrischen Verbindungen wesentlich vereinfacht.

Bei einem zwei- oder mehrteiligen Außenrückblickspiegelgehäuse 01 ist das zweite Steckerteil 07 der Steckverbindung 04 vorzugsweise in dem ersten Gehäuseteil 21 festgelegt ist, welches frei von der Gehäusepartie mit den die Öffnung umgebenden Wandungen ist.

Die Orientierung einer durch den Doppelpfeil P angedeuteten Steckrichtung der Steckverbindung 04 ist bevorzugt von dem im Außenrückblickspiegelgehäuse 01 festgelegten zweiten Steckerteil 07 aus betrachtet zur elektrischen Komponente hin (Fig. 1, Fig. 2, Fig. 3). In Richtung der durch den Doppelpfeil P angedeuteten Steckrichtung ist ein Ineinanderschieben oder Auseinanderziehen des ersten Steckerteils 06 relativ zu dem zweiten Steckerteil 07 erforderlich, um die Steckverbindung 04 herzustellen oder zu lösen. Die durch den Doppelpfeil P angedeutete Steckrichtung ist beispielsweise durch die Form und Gestalt der korrespondierenden, einander zugeordneten ersten und zweiten Steckerteile 06, 07 der Steckverbindung 04 vorgegeben. Sind beispielsweise in den Steckerteilen 06, 07 zur elektrischen Kontaktierung vorgesehene Kontaktmittel als Kontaktstifte 22 (Fig. 2) und -hülsen ausgeführt, so stimmt die durch den Doppelpfeil P angedeutete Steckrichtung mit der Längserstreckung der Kontaktstifte 22 überein. Die Festlegung 08 des zweiten Steckerteils 07 im Außenrückblickspiegelgehäuse 01 berücksichtigt die Orientierung der durch den Doppelpfeil P angedeuteten Steckrichtung der Steckverbindung 04.

Besonders bevorzugt ist die Orientierung durch den Doppelpfeil P angedeuteten Steckrichtung der Steckverbindung 04 zur auf der Rückseite des Außenrückblickspiegelgehäuses 01 vorgesehenen Öffnung für das Spiegelglas hin (Fig. 1).

Handelt es sich beispielsweise bei der elektrischen Komponente um ein auf einer Trägerplatte angeordnetes beheizbares und/oder elektrochromatisch abblendbares Spiegelglas und dient die elektrische Verbindung 02 der Beheizung und/oder Steuerung der elektrochromatischen Abblendung des Spiegelglases, so ist das komponentenseitige, erste Steckerteil 06 vorzugsweise mit seiner das gehäuseseitige, zweite Steckerteil 07 aufnehmenden oder empfangenden Seite zur Öffnung an der Rückseite des Außenspiegelgehäuses 01 hin orientiert (Fig. 1).

Neben der Orientierung der Steckverbindung 04 kann auch die Lage des zweiten Steckerteils 07 im Außenrückblickspiegelgehäuse 01 so gewählt sein, dass die Steckverbindung 04 von der mittels der zugehörigen elektrischen Verbindung 02 kontaktierten elektrischen Komponente aus betrachtet frei von einer Überdeckung durch andere, im Außenrückblickspiegelgehäuse 01 beherbergte Bauteile zugänglich ist (Fig. 1, Fig. 2, Fig. 3).

Die Lage des zweiten Steckerteils 07 im Außenrückblickspiegelgehäuse 01 beispielsweise in der oben beschriebenen Orientierung der durch den Doppelpfeil P angedeuteten Steckrichtung der Steckverbindung 04 und der zuvor beschriebenen Lage ist demnach vorzugsweise so gewählt, dass es von der elektrischen Komponente aus gesehen bei entfernter elektrischer Komponente bzw. vor Montage der elektrischen Komponente zu keinerlei Überdeckung der Steckverbindung 04 mit einem Grundträger 23 oder einem anderen im Außenrückblickspiegelgehäuse 01 untergebrachten Bauteil, wie etwa einer elektrischen Komponente kommt (Fig. 1, Fig. 2, Fig. 3).

In einer besonders bevorzugten Ausgestaltung ist die Lage des zweiten Steckerteils 07 im Außenrückblickspiegelgehäuse 01 so gewählt, dass die Steckverbindung 04 von der an der Rückseite des Außenrückblickspiegelgehäuses 01 vorgesehenen Öffnung für das Spiegelglas her gesehen bei abgenommener, das Spiegelglas tragenden Trägerplatte frei von einer Überdeckung durch andere, im Außenrückblickspiegelgehäuse beherbergte Bauteile zugänglich ist (Fig. 1).

Die Lage des zweiten Steckerteils 07 im Außenrückblickspiegelgehäuse 01 beispielsweise in der oben beschriebenen Orientierung der durch den Doppelpfeil P angedeuteten Steckrichtung der Steckverbindung 04 und der zuvor beschriebenen Lage ist demnach vorzugsweise so gewählt, dass es von der Öffnung her gesehen bei abgenommenem Spiegelglas bzw. bei abgenommener, das Spiegelglas tragenden Trägerplatte zu keinerlei Überdeckung der Steckverbindung 04 mit einem Grundträger 23 oder einem anderen im Außenrückblickspiegelgehäuse 01 untergebrachten Bauteil, wie etwa einer elektrischen Komponente kommt (Fig. 1).

In dem Außenrückspiegelgehäuse 01 können alternativ oder zusätzlich zu einer zumindest zum Teil in dem Außenrückblickspiegelgehäuse 01 beherbergten, als beheizbares und/oder elektrochromatisch abblendbares Spiegelglas ausgeführten elektrischen Komponente weitere elektrische Komponenten wenigstens zum Teil untergebracht sein. Bei diesen elektrischen Komponenten kann es sich um eine Wiederholblinkleuchte und/oder ein Modul und/oder einen Sensor einer Fahrassistenzvorrichtung und/oder ein Modul und/oder einen Sensor zur Steuerung einer Fahrzeugfunktion, wie beispielsweise zur Steuerung einer Beheizung und/oder automatischen Abblendung des Spiegelglases handeln.

Wichtig ist hervorzuheben, dass zumindest der mit der elektrischen Komponente verbundene Abschnitt 05 des Verbindungskabels 03 in dem von dem Außenrückblickspiegelgehäuse umschlossenen Innenraum zwischen der elektrischen Komponente und der Steckverbindung 04 beweglich ist. Dadurch stellt die elektrische Verbindung 02 eine frei bewegliche elektrische Verbindung 02 dar, welche beispielsweise erforderlich ist, um eine gegenüber dem Außenrückblickspiegelgehäuse 01 relativ bewegliche elektrische Komponente zu kontaktieren. Ein Beispiel für eine solche Komponente ist das auf der Trägerplatte angeordnete Spiegelglas, welches zur elektrischen Kontaktierung beispielsweise einer Spiegelglasheizung oder einer zum elektrochromatischen Abblenden benötigten elektrochromatischen Schicht mindestens eine frei bewegliche elektrische Verbindung 02 benötigt. Eine solche frei bewegliche elektrische Verbindung 02 kennzeichnet sich dadurch aus, dass sie die Verstellbarkeit des Spiegelglases bzw. allgemein der relativ beweglichen elektrischen Komponente gegenüber dem relativ zum Außenrückblickspiegelgehäuse 01 fest montierten Grundträger grundsätzlich nicht einschränkt.

Eine solche frei bewegliche elektrische Verbindung 02 eignet sich beispielsweise auch für elektrische Komponenten, die beispielsweise durch Einschieben in das Außenrückblickspiegelgehäuse 01 montiert werden, wobei die elektrische Verbindung 02 vor dem Einschieben hergestellt wird, indem das erste Steckerteil 06 mit dem zweiten Steckerteil 07 verbunden wird.

Die Erfindung ist insbesondere im Bereich der Herstellung von Außenrückblickspiegeln und Außenrückblickspiegelanordnungen für Kraftfahrzeuge gewerblich anwendbar.

### Bezugszeichenliste

- 01: Außenrückblickspiegelgehäuse
- 02: elektrische Verbindung
- 03: Verbindungskabel
- 04: Steckverbindung
- 05: Abschnitt
- 06: erstes Steckerteil
- 07: zweites Steckerteil
- 08: Festlegung
- 09: Klipsverbindung
- 10: Aufnahme
- 11: Rastnase
- 12: Innenwand
- 13: Steg
- 14: Steg
- 15: Ausschnitt
- 16: Rastfeder
- 17: freies Ende
- 18: Rastvorsprung
- 19: Aufnahmeschacht
- 20: Rastfenster
- 21: erstes Gehäuseteil
- 22: Kontaktstift
- 23: Grundträger

- P: Steckrichtung

## Patentansprüche

1. Außenrückblickspiegel für ein Kraftfahrzeug mit einem Außenrückblickspiegelgehäuse (01) und mindestens einer elektrischen Verbindung (02) zu wenigstens einer zumindest zum Teil im Inneren des Außenrückblickspiegelgehäuses (01) untergebrachten elektrischen Komponente, welche elektrische Verbindung (02) wenigstens ein Verbindungskabel (03) und zumindest eine Steckverbindung (04) aufweist,
**dadurch gekennzeichnet,**
**dass** die Steckverbindung (04) ein zumindest mittels eines Abschnitts (05) des wenigstens einen Verbindungskabels (03) an die elektrische Komponente angeschlossenes erstes Steckerteil (06) und ein dem ersten Steckerteil (06) zugeordnetes, im Außenrückblickspiegelgehäuse (01) festgelegtes zweites Steckerteil (07) umfasst und dass die Festlegung (08) durch eine Klipsverbindung (09) zwischen Außenrückblickspiegelgehäuse (01) und zweitem Steckerteil (07) hergestellt ist.

2. Außenrückblickspiegel nach Anspruch 1,
**dadurch gekennzeichnet,**
**dass** der Anschluss des mit dem ersten Steckerteil (06) verbundenen Abschnitts (05) des Verbindungskabels (03) an die elektrische Komponente mittels einer zweiten Steckverbindung hergestellt ist.

3. Außenrückblickspiegel nach Anspruch 1, oder 2,
**dadurch gekennzeichnet,**
**dass** die Orientierung einer Steckrichtung (P) der Steckverbindung (04) von dem im Außenrückblickspiegelgehäuse (01) festgelegten zweiten Steckerteil (07) aus betrachtet zur elektrischen Komponente hin ist.

4. Außenrückblickspiegel nach einem der vorhergehenden Ansprüche,
**dadurch gekennzeichnet,**
**dass** die Lage des zweiten Steckerteils (07) im Außenrückblickspiegelgehäuse (01) so gewählt ist, dass die Steckverbindung (04) von der elektrischen Komponente aus betrachtet frei von einer Überdeckung durch andere, im Außenrückblickspiegelgehäuse (01) beherbergte Bauteile (23) zugänglich ist.

5. Außenrückblickspiegel nach einem der vorhergehenden Ansprüche,
**dadurch gekennzeichnet,**
**dass** die Lage des zweiten Steckerteils (07) im Außenrückblickspiegelgehäuse (01) so gewählt ist, dass die Steckverbindung (04) von einer an der Rückseite des Außenrückblickspiegelgehäuses (01) vorgesehenen Öffnung für ein Spiegelglas her gesehen bel abgenommener, das Spiegelglas tragenden Trägerplatte frei von einer Überdeckung durch andere, im Außenrückblickspiegelgehäuse (01) beherbergte Bauteile (23) zugänglich ist.

6. Außenrückblickspiegel nach einem der vorhergehenden Ansprüche,
**gekennzeichnet durch**
mindestens eine elektrische Komponente in Form eines auf einer Trägerplatte angeordneten beheizbaren und/oder elektrochromatisch abblendbaren Spiegelglases, wobei die elektrische Verbindung (02) zur Beheizung und/oder Steuerung der elektrochromatischen Abblendung des Spiegelglases vorgesehen ist.

7. Außenrückblickspiegel nach einem der vorhergehenden Ansprüche,
**dadurch gekennzeichnet,**
**dass** das erste Steckerteil (06) und/oder das zweite Steckerteil (07) mit einer Dichtung versehen sind.

8. Außenrückblickspiegel nach einem der vorhergehenden Ansprüche,
**dadurch gekennzeichnet,**
**dass** das Außenrückblickspiegelgehäuse (01) zumindest zweiteilig ausgeführt ist und zumindest aus einem ersten Gehäuseteil (21) und einem zweiten Gehäuseteil besteht, wobei eines der beiden Gehäuseteile eine um eine Öffnung für ein Spiegelglas herumliegende Gehäusepartie mit die Öffnung umgebenden Wandungen umfasst.

9. Außenrückblickspiegel nach Anspruch 8,
**dadurch gekennzeichnet,**
**dass** das zweite Steckerteil (07) der Steckverbindung (04) in dem Gehäuseteil (21) festgelegt ist, welches frei von der Gehäusepartie mit den die Öffnung umgebenden Wandungen ist.

## Claims

1. An external rear view mirror for a motor vehicle with an external rear view mirror housing (01) and with at least one electrical connection (02) to at least one electric component that is at least partially housed in the interior of the external rear view mirror housing (01), which electrical connection (02) has at least one connecting cable (03) and at least one plug-type connector (04),
**characterized in**
**that** the plug-type connector (04) comprises a first plug part (06) connected to the electric component at least by means of one portion (05) of the at least one connecting cable (03) and also comprises a second plug part (07) associated to the first plug part (06) and fixed in the external rear view mirror housing (01), and that the fixing (08) is established by means of a clip connection (09) between the external rear view mirror housing (01) and the second plug part (07).

2. The external rear view mirror according to claim 1,
**characterized in**
**that** the portion (05) of the connecting cable (03) is connected to the electric component by means of a second plug-type connector, said portion (05) being connected to the first plug part (06).

3. The external rear view mirror according to claim 1 or 2,
**characterized in**
**that** a plug-in direction (P) of the plug-type connector (04) is oriented toward the electric component as viewed from the second plug part (07) fixed in the external rear view mirror housing (01).

4. The external rear view mirror according to any one of the preceding claims,
**characterized in**
**that** the position of the second plug part (07) in the external rear view mirror housing (01) is selected such that the plug-type connector (04) is accessible, as viewed from the electric component, without being covered by any other components (23) that are housed in the external rear view mirror housing (01).

5. The external rear view mirror according to any one of the preceding claims,
**characterized in**
**that** the position of the second plug part (07) in the external rear view mirror housing (01) is selected such that the plug-type connector (04) is accessible, as viewed from an opening for a mirror glass and when the supporting plate that supports the mirror glass is removed, without being covered by any other components (23) that are housed in the external rear view mirror housing (01), said opening being provided at the back of the external rear view mirror housing (01).

6. The external rear view mirror according to any one of the preceding claims,
**characterized by**
at least one electric component in the form of a heatable and/or electrochromatically dimmable mirror glass arranged on a supporting plate, wherein the electrical connection (02) is provided for heating the mirror glass and/or controlling the electrochromatic dimming of the mirror glass.

7. The external rear view mirror according to any one of the preceding claims,
**characterized in**
**that** the first plug part (06) and/or the second plug part (07) are/is provided with a seal.

8. The external rear view mirror according to any one of the preceding claims,
**characterized in**
**that** the external rear view mirror housing (01) has at least two parts and consists of at least a first housing part (21) and a second housing part, wherein one of the two housing parts comprises a housing section extending around an opening for a mirror glass, said housing section having walls that surround said opening.

9. The external rear view mirror according to claim 8,
**characterized in**
**that** the second plug part (07) of the plug-type connector (04) is fixed in the housing part (21) that is free of the housing section with the walls that surround the opening.

## Revendications

1. Rétroviseur extérieur destiné à un véhicule automobile, ayant au moins un boîtier de rétroviseur extérieur (01) et au moins une connexion électrique à au moins un composant électrique installé au moins partiellement à l'intérieur du boîtier de rétroviseur extérieur (01), laquelle connexion électrique (02) comporte au moins un câble de connexion (03) et au moins un raccord électrique (04),
**caractérisé en ce que**
le raccord électrique (04) comprend une première partie de raccord (06) connectée au composant électrique au moins au moyen d'un tronçon (05) du au moins un câble de connexion (03), et une deuxième partie de raccord (07) fixée dans le boîtier de rétroviseur extérieur (01), et associée à la première partie de raccord (06), et **en ce que** la fixation (08) entre le boîtier de rétroviseur extérieur (01) et la deuxième partie de raccord (07) est établie au moyen d'une connexion par encliquetage (09).

2. Rétroviseur extérieur selon la revendication 1, **caractérisé en ce que** la connexion du tronçon (05) du câble de connexion (03), relié à la première partie de raccord (06), au composant électrique est établie au moyen d'un deuxième raccord électrique.

3. Rétroviseur extérieur selon la revendication 1 ou 2, **caractérisé en ce que** l'orientation d'une direction de raccord (P) du raccord de courant (04), considérée par rapport à la deuxième partie de raccord (07) fixée dans le boîtier de rétroviseur extérieur (1), va vers le composant électrique.

4. Rétroviseur extérieur selon l'une quelconque des revendications précédentes, **caractérisé en ce que** la position de la deuxième partie de raccord (07) dans le boîtier de rétroviseur extérieur (01) est choisie de sorte que le raccord électrique (04), considéré par rapport au composant électrique, est accessible n'étant pas recouvert par un autre élément préfabriqué (23) logé dans le boîtier de rétroviseur extérieur (01)

5. Rétroviseur extérieur selon l'une quelconque des revendications précédentes, **caractérisé en ce que** la position de la deuxième partie de raccord (07) dans le boîtier de rétroviseur extérieur (01) est choisie de sorte que le raccord électrique (04), par rapport à une ouverture prévue dans le côté arrière du boîtier de rétroviseur extérieur (1) pour un miroir de rétroviseur regardé par un utilisateur, la plaque de support supportant le miroir de rétroviseur étant enlevée, est accessible n'étant pas recouvert par un autre élément préfabriqué (23) logé dans le boîtier de rétroviseur extérieur (01)

6. Rétroviseur extérieur selon l'une quelconque des revendications précédentes, **caractérisé par** au moins un composant électrique, ayant la forme d'un miroir de rétroviseur chauffant agencé sur une plaque de support et/ou d'un miroir de rétroviseur modulable de manière électrochromatique, de telle sorte que la connexion électrique (02) est prévue pour chauffer et/ou contrôler l'intensité électrochromatique du miroir de rétroviseur.

7. Rétroviseur extérieur selon l'une quelconque des revendications précédentes, **caractérisé en ce que** la première partie de raccord (06) et/ou la seconde partie de raccord (07) sont dotées d'un joint d'étanchéité.

8. Rétroviseur extérieur selon l'une quelconque des revendications précédentes, **caractérisé en ce que** le boîtier de rétroviseur extérieur (01) est réalisé au moins en deux parties, et supporte au moins une première partie de réception (21), et une seconde partie de réception, de sorte que l'une des deux parties de réception définit un secteur de réception s'étendant autour d'une ouverture destinée à un miroir de rétroviseur, des parois entourant l'ouverture.

9. Rétroviseur extérieur selon la revendication 8, **caractérisé en ce que** la seconde partie de raccord (07) du raccord électrique (04) est installée dans le secteur de réception (21), qui ne comporte pas le secteur de réception ayant les parois entourant l'ouverture.
